# EUROPEAN PATENT SPECIFICATION

(11) **EP 2 116 332 B1**
(45) Date of publication and mention of the grant of the patent: **17.08.2011**
(21) Application number: 08155646.6
(22) Date of filing: 05.05.2008
(51) Int. Cl.: B25C 1/04, G05D 16/20

(54) **Portable device for supplying compressed CO2 from a pressure vessel to a pneumatic tool**
Tragbare Vorrichtung zur Versorgung eines pneumatischen Werkzeuges mit komprimiertem CO2 aus einem Druckbehälter
Dispositif portable pour alimenter un outil pneumatique en CO2 sous pression à partir d'un récipient pressurisé

(43) Date of publication of application: 11.11.2009
(73) Proprietor: Fever Industrial Co. Ltd., Taichung County 414 (TW)
(72) Inventor: LEE, Chi Ping, 414, Wurih Township (TW)
(74) Representative: Viering, Jentschura & Partner

(56) References cited:
- US-A- 5 975 121
- US-A1- 2005 111 995
- US-B2- 7 325 397

## Description

### BACKGROUND OF THE INVENTION

### 1. Field of Invention

The present invention relates to a device according to the preamble of claim 1. Accordingly, the invention relates to pneumatic tools and more particularly to an improved device for supplying compressed CO₂ from a pressure vessel to a pneumatic tool (e.g., pneumatic nail gun, pneumatic screwdriver, pneumatic wrench, etc.), whereby a user can continuously operate the pneumatic tool in a safety manner.

### 2. Description of Related Art

A device of the initially mentioned type is known, e.g., from US-B2-7 325 397.

The invention described later is an outgrowth of earlier work by the inventor hereof, described in U.S. Patent No: 7,325,397, the teachings of which are incorporated herein by reference.

The main problem of the patent is detailed below. The container and the pressure-reducing chamber are interconnected by a hose. However, the connections are not reliable due to high air pressure. Hence, it has a safety concern. Further, in use a worker has to wear the device on the belt with the container enclosed in a bag. This may cause inconvenience to work. Thus, the need for improvement still exists.

### SUMMARY OF THE INVENTION

It is therefore one object of the invention to provide a portable device for supplying compressed CO₂ from a portable pressure vessel filled with compressed CO₂ to a pneumatic tool.

To this end, the invention provides a device according to claim 1. A further embodiment of the device of the present invention is described in claim 2.

When operating the device according to claim 1,

in response to connecting the other end of the inlet coupling (22) to the pressure vessle (10) compressed CO₂ flows from the pressure vessel (10) to the control chamber (210) via the inlet coupling (22), the passageway (215), a peripheral gap between the poppet (231) and the hollow of the bolt (230), and the passage (234) with the thumbtack member (261) being urged against the sealing disk (260) to compress the biasing member (263), move the bar (232) toward the control chamber (210), push the poppet (231) toward the bolt (230), and block the gap between the poppet (231) and the hollow of the bolt (230) when pressure building up in the pressure vessel (10) reaches a first predetermined pressure value as shown on the pressure gauge (27). Further,

in response to connecting an inlet of a pneumatic tool to the other end of the outlet coupling (28) compressed CO₂ flows from the control chamber (210) to the pneumatic tool via the outlet coupling (28) with the biasing member (263) being expanded to push the sealing disk (260) toward the control chamber (210) and deform same to push the thumbtack member (261) so that the bar (232) is adapted to cause the poppet (231) to disengage from the bolt (230) to flow compressed CO₂ from the valve (23) into the control chamber (210) until pressure in the control chamber (210) drops to a second predetermined pressure value as shown on the pressure gauge (27).

The above and other objects, features and advantages of the invention will become apparent from the following detailed description taken with the accompanying drawings.

### BRIEF DESCRIPTION OF THE DRAWINGS

FIG. 1 is a perspective view of a preferred embodiment of a portable device for supplying compressed air according to the invention;
FIG. 2 is an exploded, perspective view of the device;
FIG. 3 is an exploded view of the pressure regulator of FIG. 2;
FIG. 4 is a side elevation of the pressure regulator of FIG. 2;
FIG. 5 is a sectional view taken along line A-A' of FIG 4;
FIG. 6 is a top plan view of the device of FIG. 1;
FIG. 7 is a sectional view taken along line B--B' of FIG. 6;
FIG. 8 is a detailed view of the area in circle A in FIG. 7;
FIG. 9 is another detailed view of the area in circle A in FIG 7 showing a pressure adjustment operation; and
FIG. 10 is a side elevation of the device of FIG. 1 showing the housing adapted to pivot about the hanging member when a worker wears the device on the waist belt in work.

### DETAILED DESCRIPTION OF THE INVENTION

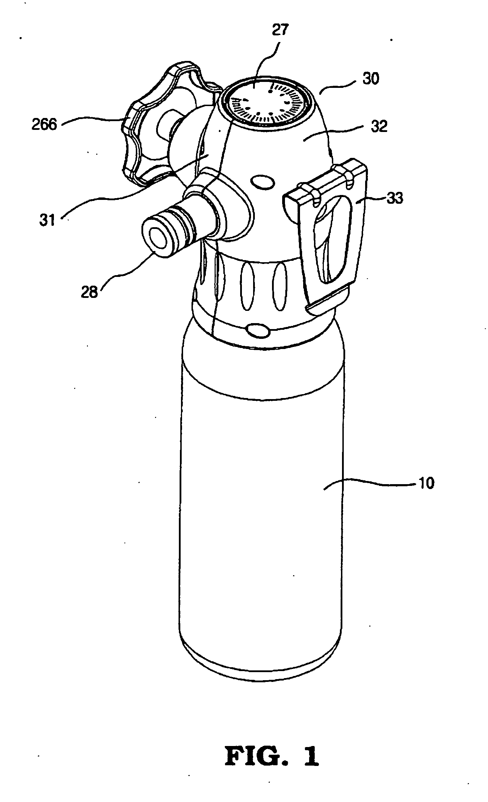

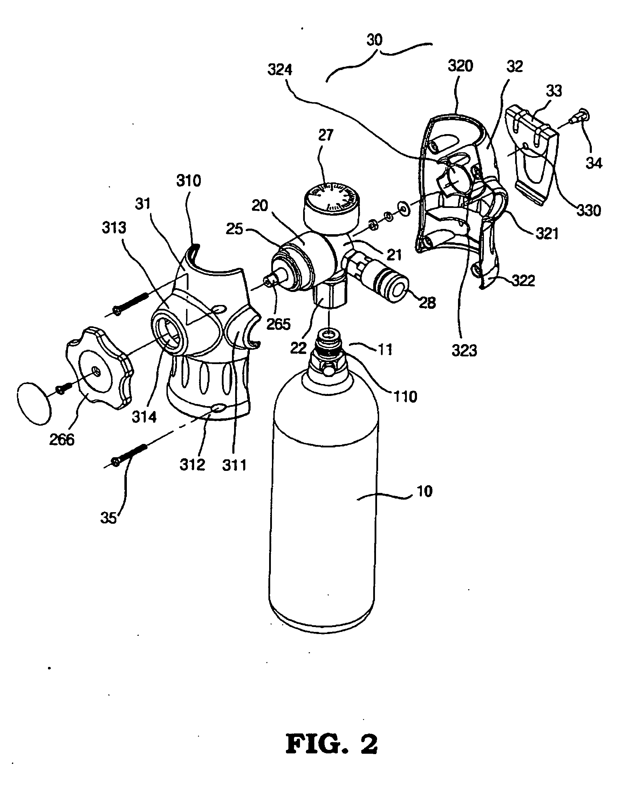

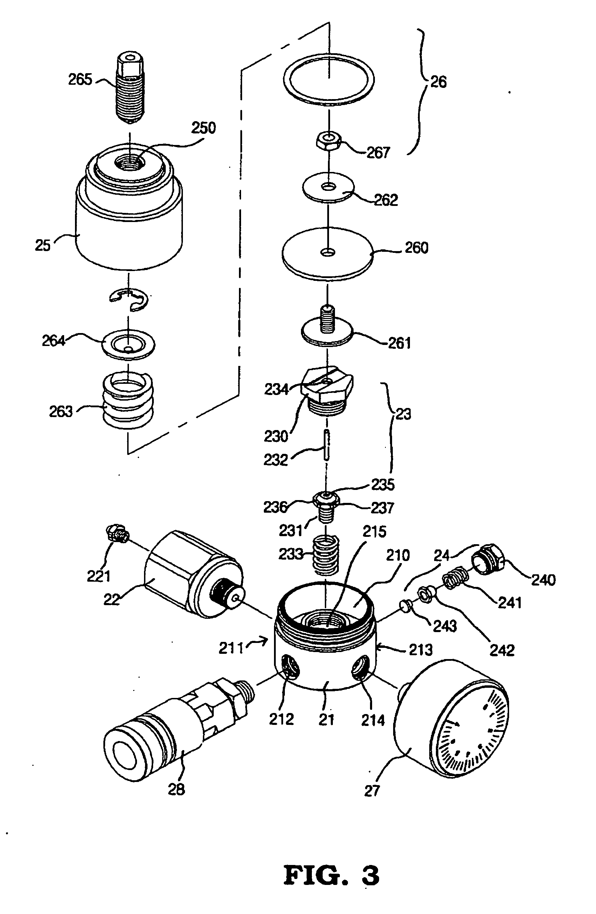

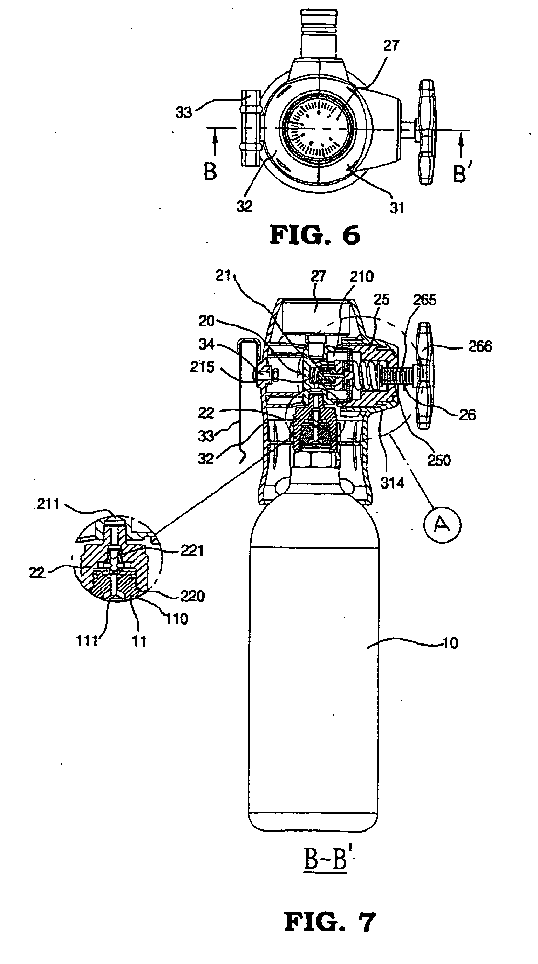

Referring to FIGS. 1 to 10, a portable device for supplying compressed air in accordance with a preferred embodiment of the invention is shown. The device comprises a cylindrical pressure vessel 10 filled with compressed CO₂, the pressure vessel 10 having a valve 11 on the top of a dome shaped upper portion thereof, the valve 11 having an externally threaded section 110 and a needle member 111; a pressure regulator 20; and a housing 30.

The pressure regulator 20 comprises a hollow cylindrical body 21 having a blind bottom, the body 21 including a control chamber 210 defined therein, an inlet 211 on the circumferential surface, an outlet 212 on the circumferential surface spaced from the inlet 211 in an angle about 90 degrees, a relief valve fixing hole 213 on the circumferential surface opposing the outlet 212, and a pressure gauge fixing hole 214 on the circumferential surface opposing the outlet 212. That is, the inlet 211, the outlet 212, the pressure gauge fixing hole 214, and the relief valve fixing hole 213 are equally spaced around the circumferential surface of the body 21.

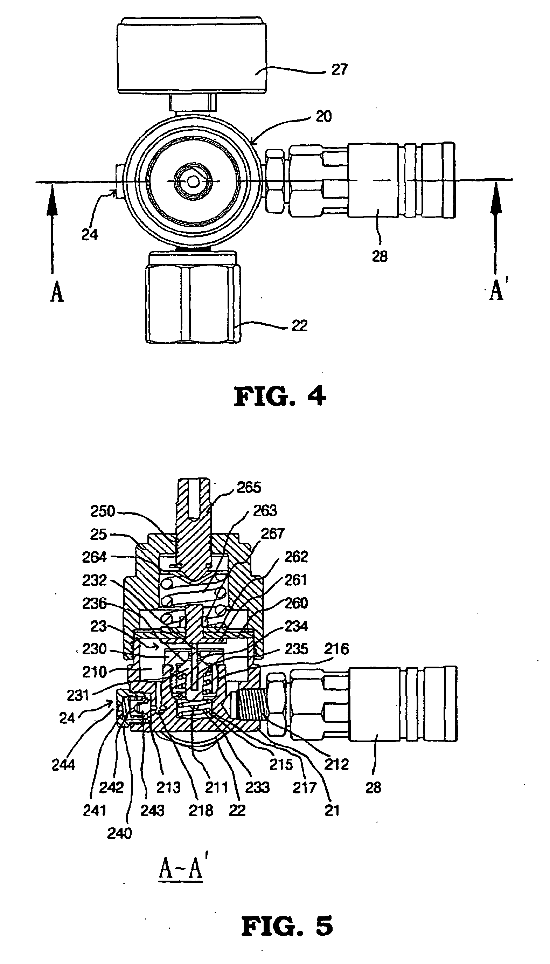

A hollow inlet coupling 22 is provided to be threadedly fastened in the threaded inlet 211 and has internal threads 220 secured to the externally threaded section 110 of the valve 11, and a first poppet 221 at inner end of the internal threads 220 proximate one end for controlling the input of compressed CO2 from the pressure vessel 10 to the pressure regulator 20. A stepped diameter passageway 215 is provided to communicate with the control chamber 210 and the inlet 211. The passageway 215 has an upper internally threaded section 216 and a lower receptacle 217 (see FIG 5).

The pressure regulator 20 further comprises a valve 23 including a hollow first bolt 230 threadedly secured to the internally threaded section 216 of the passageway 215 and having an axial passage 234; a second poppet 231 provided in the hollow shank of the first bolt 230 and having an axial recess 235, a multi-sided member 237 on the head, and a dome 236 between the tip of the head and the multi-sided member 237; a bar 232 having one end seated on the bottom of the recess 235 and the other end passing the passage 234 into the control chamber 210; and a spring 233 having an upper portion put on the shank of the second poppet 231 and a lower portion anchored in the receptacle 217 such that the second poppet 231 is biased toward the passage 234 by the spring 233.

The pressure regulator 20 further comprises a relief valve 24 comprising a hollow second bolt 240 threadedly fastened in the relief valve fixing hole 213 and having an axial orifice 244 in communication with the external, a spool 242 provided in the hollow of the second bolt 240, a spring 241 put on the shank of the spool 242, and a third poppet 243 in the spool 242. A passageway 218 in the body 21 is in fluid communication with the relief valve 24 fastened in the relief valve fixing hole 213 and the control chamber 210.

The pressure regulator 20 further comprises a cap 25 including a stepped diameter bore 250 having threads in both ends so that an adjustment screw 265 having a needle end can be fastened in one end of the bore 250 and the other end of the bore 250 can be secured to the upper externally threaded section of the body 21.

The pressure regulator 20 further comprises a pressure adjustment assembly 26 provided in the cap 25. The pressure adjustment assembly 26 comprises a rubber sealing disk 260 fastened in an internal shoulder of the bore 250 on the top edge of the body 21 by the cap 25 and having a central through hole (not numbered), a washer 262 having a central through hole (not numbered) on the disk 260, a nut 267 on the washer 262, a disc 264 seated in the bore 250 and having a recessed center being urged by the adjustment screw 265, a spring 23 biased between the washer 262 and the disc 264, a thumbtack member 261 having a threaded shank passing the through hole of the disk 260 and the through hole of the washer 262 and threadedly secure to the nut 267 and dispose in the spring 263.

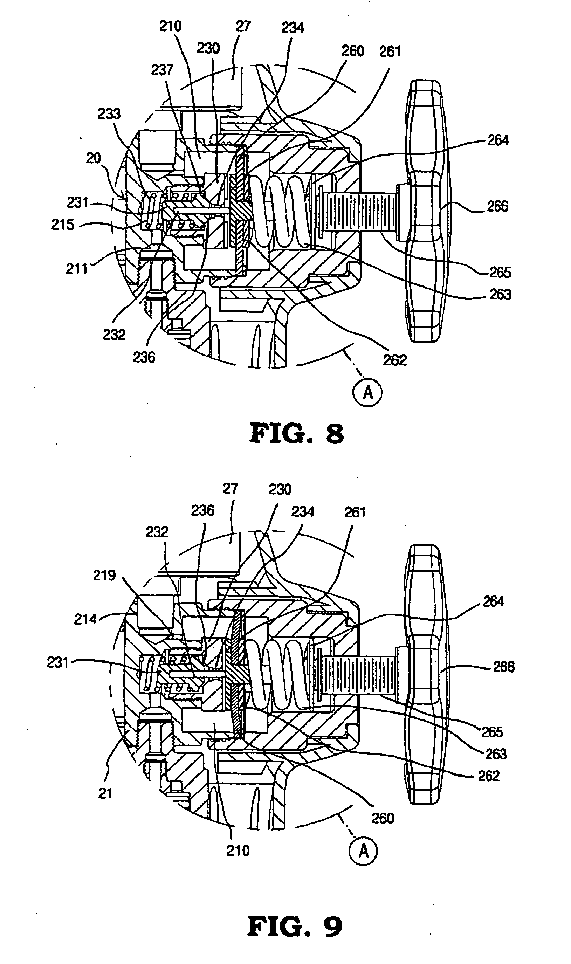

As shown in FIGS. 8 and 9, the sealing disk 260 thus prevents CO2 from flowing toward the cap 25. A handwheel 266 is mounted on the adjustment screw 265 such that turning the handwheel 266 will drive the adjustment screw 265 to press the disc 264. And in turn, the spring 23 is compressed to push down the washer 262 by the disc 264. The sealing disk 260 thus deforms elastically (i.e., forming a concave central portion) to push the thumbtack member 261 which in turn pushes the bar 232. And in turn, the dome 236 disengages from the passage 234. As a result, compressed CO₂ may flow into the control chamber 210 via the passage 234.

The pressure regulator 20 further comprises a pressure gauge 27 threadedly secured to the pressure gauge fixing hole 214 and being in fluid communication with the control chamber 210 so that the pressure gauge 27 may measure pressure in the control chamber 210. The pressure regulator 20 further comprises an outlet coupling 28 threadedly secured to the outlet 212 and being in fluid communication with the control chamber 210 so that compressed CO₂ in the control chamber 210 may flow to a pneumatic tool coupled to the outlet coupling 28 for use.

The housing 30 comprises a first shell 31, a mating second shell 32, and a hanging member 33. The first shell 31 is provided to cover the cap 25 and comprises a top first half circular edge 310 shaped to conform to one half of the circumference of the pressure gauge 27, a side second half circular edge 311 shaped to conform to one half of the circumference of the outlet coupling 28, a bottom third half circular edge 312 shaped to conform to one half of the circumference of the dome portion of the pressure vessel 10, and a side shroud 313 at an angle of about 90 degrees relative to the side second half circular edge 311, the side shroud 313 having a bore 314 with the cap 25 received therein but exposing the adjustment screw 265 so that the adjustment screw 265 and the handwheel 266 can be threadedly secured together.

The mating second shell 32 comprises a top fourth half circular edge 320 shaped to conform to the other half of the circumference of the pressure gauge 27, a side fifth half circular edge 321 shaped to conform to the other half of the circumference of the outlet coupling 28, a bottom sixth half circular edge 322 shaped to conform to the other half of the circumference of the dome portion of the pressure vessel 10, a side opening 324 at an angle of about 90 degrees relative to the side fifth half circular edge 321, the side opening 324 being threadedly secured to the body 21, and a threaded hole 323 proximate the side opening 324.

The hinged hanging member 33 comprises a hole 330. A screw 34 passes the hole 330 to drive into the threaded hole 323 to secure the hanging member 33 to the mating second shell 32. Hence, the hanging member 33 is adapted to pivot about the screw 34. Moreover, a plurality of fasteners (e.g., screws) 35 are provided to threadedly secure the first shell 32 and the mating second shell 32 together.

As shown in FIG 1, it is seen that both the pressure regulator 20 and the top of the pressure vessel 10 are enclosed by the housing 30 with the pressure gauge 27, the handwheel 266, the outlet coupling 28, and the hanging member 33 exposed. Hence, protection of the important components of the device is carried out. This also increases convenience and safety in use.

In a first step of use, a person may connect the inlet coupling 22 to the valve 11. Hence, the first poppet 221 is opened by the needle member 111. Immediately, compressed CO₂ flows from the pressure vessel 10 to the control chamber 210 via the valve 11, the inlet coupling 22, the passageway 215, the multi-sided member 237, and the passage 234. Hence, pressure in the control chamber 210 increases greatly in a very short time. And in turn, the thumbtack member 261 is urged to push the sealing disk 260 toward the spring 263. As a consequence, the bar 232 moves toward the control chamber 210. And in turn, the second poppet 231 moves toward passage 234 so that the dome 236 may block the passage 234 to stop the compressed CO2 from flowing into the control chamber 210. As a result, the pressure in the control chamber 210 is maintained at a preset value.

In a second step of use, a person may attach an inlet of a pneumatic tool (e.g., pneumatic nail gun) to the outlet coupling 28. Immediately, compressed CO₂ flows from the control chamber 210 to the pneumatic tool. Hence, pressure in the control chamber 210 decreases gradually. As such, the spring 263 expands to push the sealing disk 260 toward the control chamber 210. As a consequence, the central portion of the sealing disk 260 deforms to form a recessed portion. And in turn, the thumbtack member 261 pushes the bar 232 to disengage the second poppet 231 from the passage 234. Hence, compressed CO₂ may flow from the valve 23 into the control chamber 210 until the pressure in the control chamber 210 increases to the preset value (see FIG. 8). At this time, the passage 234 is blocked again.

For adjusting the preset (i.e., maximum) value of the pressure in the control chamber 210, a user may turn the handwheel 266 to drive the adjustment screw 265 which in turn pushes the central portion of the disc 264. And in turn, the disc 264 compresses the spring 263. The preset value can be seen on the scale of the pressure gauge 27. The portable device thus can be employed to supply compressed

CO₂ of one of different preset pressure values to a desired pneumatic tool.

The pressure in the control chamber 210 may increase to a value higher than the preset value due to malfunction. For example, the passage 234 cannot be closed in the compressed CO₂ input process. Advantageously, the spool 242 of the relief valve 24 may move to compress the spring 241 when the pressure in the control chamber 210 continues to increase after reaching the preset value. Hence, the third poppet 243 moves to open the passageway 218. As a result, compressed CO₂ flows to the external via the orifice 244, thereby immediately decreases the pressure in the control chamber 210 to a safe value.

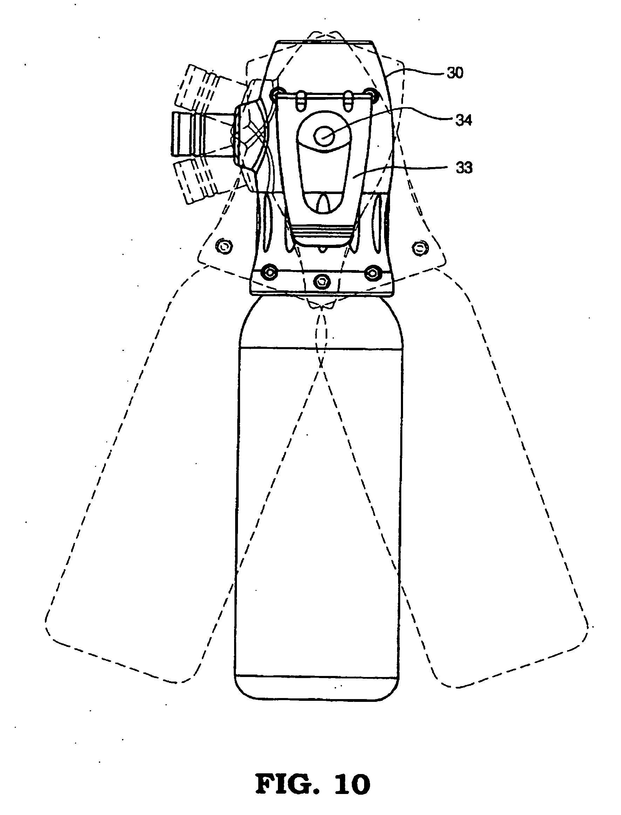

Note that in use the hanging member 33 is looped around, for example, the waist belt of a worker. Further, the housing 30 is adapted to pivot about the screw 34 (see FIG. 10). Hence, the device can always maintain its gravity downward even the hanging member 33 is not disposed in a vertical position.

While the invention herein disclosed has been described by means of specific embodiments, numerous modifications and variations could be made thereto by those skilled in the art without departing from the scope of the invention set forth in the claims.

## Claims

1. A device comprising:
a pressure regulator (20) comprising:
a hollow body (21) including a control chamber (210) defined therein, the control chamber (210) having a threaded stepped diameter passageway (215), an inlet coupling (22) having one end secured to the body (21) and the other end adapted to connect to a portable pressure vessel (10) filled with compressed CO₂, an outlet coupling (28) having one end secured to the body (21) and the other end adapted to connect to a pneumatic tool, a relief valve (24) mounted on the body (21), and a pressure gauge (27) mounted on the body (21);
a valve (23) including a hollow bolt (230) threadedly secured to the internally threaded section (216) of the passageway (215) and having an axial passage (234), a spring-loaded poppet (231) biased between the hollow of the bolt (230) and the passage (215) and having an axial recess (235), and a bar (232) having one end seated on the recess (235) and the other end passing the passage (234) into the control chamber (210);
a cap (25) including a threaded stepped diameter bore (250) having a lower portion threadedly secure to the body (21), an adjustment screw (265) threadedly secure to an upper portion of the bore (250) and a handwheel (266) mounted on the head of the adjustment screw (265); and
a pressure adjustment assembly (26) disposed in the cap (25) and the body (21) and including a resilient sealing disk (260) fastened in a shoulder of the bore (250) on the top edge of the body (21), a disc (264) having a recessed center urged by the adjustment screw (265), a thumbtack member (261) having a threaded shank, a fastener (262) for securing the thumbtack member (261) and the sealing disk (260) together, and a biasing member (263) biased between the sealing disk (260) and the disc (264) wherein the sealing disk (260) is adapted to stop fluid communication from the control chamber (210) to the bore (250); wherin in response to turning the handwheel (266) the adjustment screw (265) is adapted to push the disc (264) to compress the biasing member (263) so as to adjust a first predetermined pressure value as shown on the pressure gauge (27) ; **characterized by**
a housing (30) for partially enclosing the pressure regulator (20) with the handwheel (266), the pressure gauge (27), and the outlet coupling (28) being exposed; and
a hanging member (33) pivotably secured onto the housing (30).

2. The device of claim 1, wherein the housing (30) comprises a first shell (31) and a mating second shell (32) threadedly secured to the first shell (31).

## Patentansprüche

1. Eine Vorrichtung, aufweisend:
einen Druckregulierer (20), aufweisend:
einen hohlen Körper (21), umfassend eine Steuerkammer (210), welche darin definiert ist, wobei die Steuerkammer (210) einen Durchgang (215) mit Gewinde und abgestuftem Durchmesser hat, ein Einlass-Verbindungsstück (22), dessen eines Ende an dem Körper (21) befestigt ist und dessen anderes Ende angepasst ist, um mit einem tragbaren Druckbehälter (10), welcher mit komprimiertem CO₂ gefüllt ist, verbunden zu werden, ein Auslass-Verbindungsstück (28), dessen eines Ende an dem Körper (21) befestigt ist und dessen anderes Ende angepasst ist, um mit einem pneumatischen Werkzeug verbunden zu werden, ein Sicherheits- oder Überdruckventil (24), welches an dem Körper (21) montiert ist, und eine Druckanzeige (27), welche an dem Körper (21) montiert ist;
ein Ventil (23), umfassend einen hohlen Bolzen (230), welcher mit dem Innengewindeabschnitt (216) des Durchgangs (215) verschraubt ist und welcher einen Axialdurchgang (234) hat, einen federbelasteten Ventilkegel oder Ventilteller (231), welcher zwischen dem Hohlraum des Bolzens (230) und dem Durchgang (215) vorgespannt ist und welcher eine Axialaussparrung (235) hat, und einen Stift (232), dessen eines Ende an der Aussparung (235) sitzt und dessen anderes Ende durch den Durchgang (234) in die Steuerkammer (210) eintritt;
eine Kappe (25), umfassend eine Bohrung (250) mit Gewinde und abgestuftem Durchmesser, welche einen unteren Abschnitt hat, der mit dem Körper (21) verschraubt ist, eine Einstellschraube (265), welche mit einem oberen Abschnitt der Bohrung (250) verschraubt ist, sowie ein Handrad (266), welches an dem Kopf der Einstellschraube (265) montiert ist; und
eine Druckeinstellvorrichtung (26), welche in der Kappe (25) und dem Körper (21) angeordnet ist und eine elastische Dichtscheibe (260), welche in einer Schulter der Bohrung (250) an dem oberen Rand des Körpers (21) angebracht ist, sowie eine Scheibe (264) mit einer eingesenkten oder zurückstehenden/zurückgesetzten Mitte, welche von der Einstellschraube (265) zurückgedrängt wird, ein reisnagelförmiges Element (261) mit einem Gewindeschaft, ein Befestigungselement (262) zum aneinander Befestigen des reisnagelförmigen Elements (261) und der Dichtscheibe (260), und ein Vorspannteil (263) aufweist, welches zwischen der Dichtscheibe (260) und der Scheibe (264) vorgespannt ist, wobei die Dichtscheibe (260) angepasst ist, um eine Fluidverbindung von der Steuerkammer (210) zu der Bohrung (250) zu stoppen bzw. zu unterbrechen; wobei in Reaktion auf ein Drehen des Handrands (266) die Einstellschraube (265) die Scheibe (264) drücken kann, um das Vorspannteil (263) zu komprimieren, um einen ersten vorbestimmten Druckwert einzustellen, wie auf der Druckanzeige (27) angezeigt; **gekennzeichnet durch**
ein Gehäuse (30) zum teilweisen Umhüllen des Druckregulierers (20), wobei das Handrad (266), die Druckanzeige (27) und das Auslass-Verbindungsstück (28) freiliegen, und
ein Hängeelement (33), welches schwenkbar an dem Gehäuse (30) befestigt ist.

2. Die Vorrichtung nach Anspruch 1, wobei das Gehäuse (30) eine erste Hülle (31) und eine passende zweite Hülle (32) aufweist, welche mit der ersten Hülle (31) verschraubt ist.

## Revendications

1. Dispositif comprenant :
un régulateur de pression (20) comprenant :
un corps creux (21) comprenant une chambre de commande (210) définie à l'intérieur de ce dernier, la chambre de commande (210) ayant une voie de passage diamétrale étagée filetée (215), un couplage d'entrée (22) ayant une extrémité fixée sur le corps (21) et l'autre extrémité adaptée pour se raccorder à une bouteille sous pression portable (10) rempli avec du CO₂ comprimé, un couplage de sortie (28) ayant une extrémité fixée au corps (21) et l'autre extrémité adaptée pour se raccorder à un outil pneumatique, une soupape de décharge (24) montée sur le corps (21), et une jauge de pression (27) montée sur le corps (21) ;
une soupape (23) comprenant un boulon creux (230) fixé par filetage sur la section intérieurement filetée (216) de la voie de passage (215) et ayant un passage axial (234), un clapet à ressort (231) sollicité entre le creux du boulon (230) et le passage (215) et ayant un évidement axial (235), et une barre (232) ayant une extrémité installée sur l'évidement (235) et l'autre extrémité passant dans le passage (234) dans la chambre de commande (210) ;
un capuchon (25) comprenant un alésage fileté à diamètre étagé (250) ayant une partie inférieure fixée par filetage au corps (21), une vis de réglage (265) fixée par filetage à une partie supérieure de l'alésage (250), et un volant de manoeuvre (266) monté sur la tête de la vis de réglage (265) ; et
un ensemble d'ajustement de pression (26) disposé dans le capuchon (25) et le corps (21) et comprenant un disque d'étanchéité élastique (260) fixé dans un épaulement de l'alésage (250) sur le bord supérieur du corps (21), un disque (264) ayant un centre évidé poussé par la vis de réglage (265), un élément formant punaise (261) ayant une tige filetée, une fixation (262) pour fixer l'élément formant punaise (261) et le disque d'étanchéité (260) ensemble, et un élément de sollicitation (263) sollicité entre le disque d'étanchéité (260) et le disque (264) dans lequel le disque d'étanchéité (260) est adapté pour arrêter la communication de fluide de la chambre de commande (210) à l'alésage (250) ; dans lequel en réponse à la rotation du volant de manoeuvre (266), la vis de réglage (265) est adaptée pour pousser le disque (264) afin de comprimer l'élément de sollicitation (263) pour ajuster une première valeur de pression prédéterminée, comme représenté sur la jauge de pression (27) ; **caractérisé par** :
un logement (30) pour enfermer partiellement le régulateur de pression (20) avec le volant de manoeuvre (266), la jauge de pression (27) et le couplage de sortie (28) étant exposés ; et
un élément de suspension (33) fixé de manière pivotante sur le logement (30).

2. Dispositif selon la revendication 1, dans lequel le logement (30) comprend une première coque (31) et une deuxième coque de couplage (32) fixée par filetage à la première coque (31).
